# EUROPEAN PATENT SPECIFICATION

(11) **EP 2 221 310 B1**
(45) Date of publication and mention of the grant of the patent: **03.09.2014**
(21) Application number: 10005047.5
(22) Date of filing: 13.03.2000
(51) Int. Cl.: C07F 7/14, C07F 7/18

(54) **Promoted hydrosilation reactions**
Aktivierte Hydrosilylierungsverfahren
Réaction d'hydrosilation activée

(30) Priority: 11.03.1999 US 123789 P
(43) Date of publication of application: 25.08.2010
(62) Divisional of application: 00104540.0
(73) Proprietor: Momentive Performance Materials Inc., Waterford, NY 12188 (US)
(72) Inventor: Mendicino, Frank D., Marietta, OH 45750 (US)
(74) Representative: Wibbelmann, Jobst

(56) References cited:
- EP-A- 0 232 551
- EP-A- 0 969 007
- CS-B1- 195 549
- JP-A- 11 180 986
- SU-A1- 415 268
- US-A- 5 986 124
- US-A- 5 994 573

## Description

### FIELD OF THE INVENTION

This invention relates to the use of carboxylic acids as promoters for a platinum catalyzed hydrosilation reaction for improving rates and/or selectivities.

### BACKGROUND OF THE INVENTION

A number of patents in the art have disclosed that various promoters can increase the rates and/or selectivities of hydrosilation reactions. In terms of chemical structures or properties, the various types of promoters differ dramatically, such that it is not possible to predict which chemical structures or properties are important for promotion, or even which hydrosilation reactions may be promoted, since promotion will also depend on the chemical structures and properties of each of the hydrosilyl reactant, the unsaturated reactant, and the hydrosilation catalyst. For example the reaction of trichlorosilane with allyl chloride is promoted by weak amines such as phenothiazine (U. S. 3,925,434), while the reaction of methyldichloro-silane with allyl chloride requires a more basic tertiary amine such as tributylamine (Ger. Patent 1,156,073). Both of those reactions can be promoted with a second hydridosilane (U.S. 4,614,812) by a different promotion mechanism. Alkali metal carbonates or bicarbonates promote hydrosilations of allylic amines with hydridoalkoxysilanes (U. S. 4,481,364). Other hydrosilation reactions are know to be promoted by phosphines, oxygen gas, oxygen-containing organics including aldehydes, unsaturated ketones, tertiary alcohols and silylated derivatives thereof, and propargylic alcohols and silylated derivatives thereof, inorganic or organic salts including sodium alkoxides and compounds of tin and cobalt, and other organic compounds, including alcohols, diols, ethers and esters.

Hydrosilation promotion effects are narrowly specific, and an effective promoter may work for a single hydrosilation reaction between a specific hydridosilane and a specific olefin. In addition to increasing reaction rates, yields, or selectivities, a promoter may act by preventing undesirable side reactions which reduce yields/selectivities, such as undesired polymerization or formation of less desirable isomeric products. For example, added methanol is disclosed as being effective in reducing the undesired beta-isomer content in reaction products from platinum-catalyzed hydrosilations between trimethoxysilane and the epoxyolefins, vinylcyclohexene monoepoxide and allyl glycidyl ether (US Patent No. 44,966,981).

While the known promoters include many Lewis acids and bases, carboxylic acids appear to have been the subject of very limited studies, consisting mainly of a Russian patent (USSR 415,268), in which acetic acid is disclosed, along with ketones, and esters thereof, as promoting platinum-catalyzed hydrosilation reactions between hydridoalkoxysilanes and allylamine. While the promotion effect may have been positive, the highest reported yield was only 61%, and reaction times were too long to be practical, particularly at that low yield.

Moreover, the use of acetic acid in promoting hydrosilations involving trimethoxysilane has been coincidental with the use of vinylcyclohexene oxide as the olefin, since acetic acid was discovered to be an impurity derived from early processes to make that epoxyolefin using peracetic acid (U. S. 2,687,406), as well as allyl glycidyl ether (J. Am. Chem. Soc., 81, 3350(1959)). However, the use of acetic acid provides products with low levels of acetoxy groups on silicon, which can affect downstream uses of the hydrosilation products.

Acetic acid, although effective, has the disadvantage of providing acetoxy groups on silicon which contaminate the products, since they have a molecular weight (59), which is close to other typical silane substituents, such as chlorine (35.5), methoxy (31), and ethoxy (45). This makes separation of small amounts of the acetoxy-containing contaminants very difficult by standard methods, such as distillation.

CS 195549 describes hydrosilation of 4-vinylcyclohexene by halo or alkoxy hydridosilanes using chloroplatinic acid and an aliphatic or aromatic monocarboxylic acid having 1-12 carbon atoms.

### BRIEF SUMMARY OF THE INVENTION

Long chain carboxylic acids promote the platinum-catalyzed hydrosilation reactions of a wide range of hydridosilanes. Particular aspects of the invention include hydrosilations of allylic compounds and vinyl compounds having oxygen-containing groups with a carboxylic acid having a molecular weight greater than 60 and a boiling point higher than 118°C at atmospheric pressure, and the use of acids having plural carboxylic acid groups and/or having at least 14 carbon atoms in hydrosilations of aliphatically unsaturated silanes generally.

The invention is a hydrosilation method comprising reacting a reaction mixture comprising:
a) a compound having aliphatic carbon-carbon unsaturation thereon;
b) a hydridosilane compound; and
c) a platinum catalyst, to produce a hydrosilation addition product of said compounds a) and b), the invention **characterized in that** the reaction mixture further comprises:
d) a carboxylic acid having a molecular weight greater than 60 and a boiling point higher than 118°C at atmospheric pressure, and
   either
   i) the compound a) is a compound having at least one group of the formula:

      CH₂-CH-CH₂-;
   ii) the compound a) is a compound having at least one group of the formula:

      CH₂=CH-

      and at least one oxygen-containing functional group; or
   iii) the compound d) is selected from the group consisting of carboxylic acids having at least 14 carbon atoms and compounds having at least two carboxylic groups thereon.

### DETAILED DESCRIPTION OF THE INVENTION

The invention provides processes for improving the yields and rates of hydrosilation reactions under relatively mild conditions using relatively long chain carboxylic acids as promoters. The yields should be higher than 90%, more preferably higher than 95% and most preferably more than 99%. An aspect of the invention also provides such processes wherein higher purity products are attainable from hydridoalkoxysilane reactants than with prior art processes. The molar ratio of gamma to beta isomers of olefin addition products should be greater than 100 to 1, preferably, 200 to 1.

For example, the reaction of methyldichlorosilane with allyl cyanide is promoted by a long chain carboxylic acid, particularly when the reactions are run under ambient pressure in sealed autoclaves. The yields, or conversions, are higher when the reaction is run with the addition of about 1 wt-% of acid, based on the weight of the combined reactants, in the presence of about 25 parts per million (ppm) of platinum as catalyst, added as a solution of chloroplatinic acid.

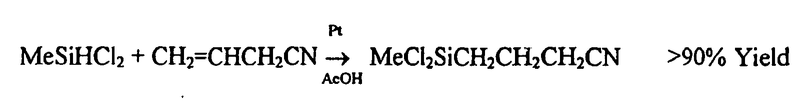

In the case of the methyldichlorosilane reaction with allyl cyanide, it is believed that the role of the long chain carboxylic acid in promoting said reaction is to react with an impurity, methylchlorosilane, which is formed during the hydrosilation reaction via a disproportionation reaction of methyldichlorosilane to form both methylchlorosilane and methyltrichlorosilane.

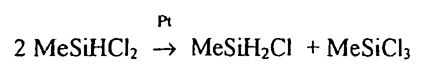

The methylchlorosilane acts as a catalyst poison, bonding preferentially to the platinum and retarding the hydrosilation, until it is removed by reaction with acetic acid.

MeSiH₂Cl + Pt → MeSiH₂Cl/Pt complex + RC(=O)OH → MeSiH(OC(=O)R)Cl + Pt + HCl

When the reaction is run in the presence of a high boiling, high molecular weight carboxylic acid, the by-products arising from the promotion are also high-boiling, and the desired product can be isolated by distillation without contamination with acyloxy groups.

Similar promotion effects have been observed when hydrosilation reactions of hydridoalkoxysilanes are promoted by long chain carboxylic acids. In certain hydrosilation reactions involving hydridoalkoxysilanes, another benefit occurs in that not only are the rates and conversions increased, but the products may be purer because of decreased formation of undesired isomeric products. In the latter case, decreased formation of undesired isomeric products is demonstrated by reduction in the amount of undesired beta-isomer formed by addition of the hydridosilane to the allyl group, and a corresponding increase in the amount of desired gamma-isomer which is formed. Moreover when acetic acid is replaced, all or in part, by a higher 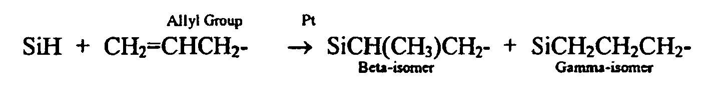 boiling, higher molecular weight carboxylic acid such as oleic acid, the low level of close-boiling acetoxy group-containing impurities is lowered. Thus, the use of oleic acid, alone or mixed with acetic acid, as a promoter for reactions of hydridoalkoxysilanes with allyl glycidyl ether, allows for formation of distilled products in which the ratio of gamma-isomer to beta-isomer is greater than 100 and the content of acetoxy groups is less than 100 ppm by weight.

### Carboxylic Acids

The relatively long chain carboxylic acids used herein have a molecular weight >60, and a boiling point >118°C at atmospheric pressure. It is preferred to select carboxylic acids of significantly higher molecular weight, i.e., >100, such as oleic acid or erucic acid. Oleic acid has the added advantage of being a liquid at or near typical ambient temperatures.

Another consideration in selecting a carboxylic acid promoter for platinum-catalyzed hydrosilations is the acid strength of said carboxylic acid. Simple carboxylic acids are quite effective, including the above-mentioned oleic acid. Carboxylic acids with electron-withdrawing substituents and correspondingly higher acid strengths may be too acidic for effective promotion and may in fact cause other undesirable reactions to occur. One such example would be the acid-catalyzed polymerization of the epoxy groups in vinylcyclohexene monoepoxide. Formic acid is a strong acid which does not meet the molecular weight or volatility criteria, but which is also difficult to obtain in the anhydrous state needed for use with reactive silanes.

ricinolenic, oleic acid, erucic acid Other carboxylic acids which may be used include cyanoacetic acid, phenylacetic acid.

### Hydridosilanes

The hydridosilanes may be alkoxy or chloro silanes having at least one hydrogen atom bonded to silicon. Hydridochlorosilanes may be selected from the group of trichlorosilane, methyldichlorosilane, and dimethylchlorosilane. The hydridoalkoxysilanes that may be used include the trialkoxysilanes, such as trimethoxysilane, triethoxysilane, tri-n-propoxysilane, and triisopropoxysilane. Trimethoxysilane and triethoxysilane are preferred. Other hydridoalkoxysilanes include dialkoxysilanes such as methyldimethoxysilane, methyldiethoxysilane, dimethylmethoxysilane, and dimethylethoxysilane.

Promotable hydridosilanes in general can be represented by the formula

RₙX₃₋ₙSiH,

wherein R is a branched or linear alkyl group of 1 to 18 carbon atoms, a cyclic alkyl group of four to eight carbon atoms or an aryl, alkaryl, or aralkyl group of six to twelve carbon atoms, optionally containing halogen, oxygen, or nitrogen substituents with the proviso that such substituents do not interfere with either hydrosilation or promotion, and X is a reactive group selected from a halogen group, i.e., fluorine, chlorine, bromine or iodine, or an alkoxy group, selected from -OR, wherein R is as defined above, and n is an integer selected from 0, 1, and 2.

### Olefins

The hydrosilated compounds, designated generally herein as olefins, are aliphatically unsaturated compounds, which may have certain functional substituents thereon. The olefins include alkenes, and compounds having a vinyl, acetylenic or allylic group thereon. Terminal alkenes may be used, such as the 1-alkenes, including ethylene, propylene, butene, pentene, hexene, octene and octadecene, and the 2-alkyl-1-alkenes, such as 2-methylpropene, 2-methylbutene, diisobutylene, as well as certain non-terminal alkenes such as tertiary amylene, 2-butene, cyclopentene, and cyclohexene. The 1-alkenes are preferred. Other olefins include oxygen-containing vinyl compounds and allylic compounds generally. Examples of such other olefins include the epoxy olefins, such as vinylcyclohexene monoepoxide, butadiene monoepoxide, allyl glycidyl ether, and allylic olefms, including, but not limited to, allyl esters, allyl polyethers, and allylic tertiary amines, plus their methallyl analogs. Primary and secondary amines are not preferred since they will react with the acid. Vinylic compounds are included, namely vinyl esters and ethers, and acrylates and methacrylates.

### Catalyst

Catalysts include those which contain platinum and which function as either homogeneous or heterogeneous hydrosilation catalysts. Typical catalysts include chloroplatinic acid and various solutions thereof, including solutions wherein the chloroplatinic acid has been chemically modified, chloroplatinate salts and their solutions, vinylsiloxane complexes containing platinum and solutions thereof (Karstedt catalyst), olefin and diolefin complexes of platinum and solutions thereof, and platinum deposited as the metal on various substrates, including carbon, alumina, silica, organically modified silicas, or base metals. Platinum complexes containing strongly bound ligands such as phosphines, acetylacetonate groups, or amines, may be promotable with the proviso that such ligands must not interfere with either the hydrosilation or the promotion.

The catalyst should be used at a level of 0.5 to 100 ppm based on total charge, preferably 5 to 50 ppm, most preferably 5 to 10 ppm.

### Process

Promotion by carboxylic acids is not subject to limitations regarding equipment, relative to size or type of material of construction. A wide variety of laboratory or commercial scale equipment currently capable of running hydrosilation reactions may be used. The hydrosilation process may be run in a batch, continuous or semi-batch mode.

Reaction conditions are also not narrowly critical with regard to temperature, pressure, or the absence or presence of inert solvents. Conditions currently in use for various hydrosilation reactions can be used for the promoted hydrosilations. It is possible that effective promotion will be accompanied by the added advantages of lowering reaction temperature, and catalyst concentration, or both. Preferred reaction conditions include a temperature from about ambient temperature up to about 150°C, with 60 to 120°C being most preferred. Generally, the process is carried out at a pressure of about 0.2 to 2.0 atmospheres (0.02-0.2 MPa), with ambient pressure being preferred, but operation at higher or lower pressures may be performed to maintain higher or lower reaction temperatures dependent on the volatilities of the respective reactants.

The residence time within the reactor is not critical but should be sufficient to achieve a satisfactory degree of conversion to the hydrosilated product, i.e., >80%, within acceptable limits given the volume of the equipment and the desired rate of production. Typical acceptable residence times are on the order of 0.5 to 4 hours.

Preferably the olefin should be present at a stoichiometric molar excess of 10-20%, though a stoichiometric equivalence may be used.

The carboxylic acid may be present at the start of the hydrosilation, or may be added during the reaction if it is not proceeding well (Caution - carboxylic acid should not be added to incomplete reactions wherein significant quantities of both hydrosilyl reactant and olefinic reactant have accumulated, a rapid exothermic reaction may occur).

Promotion by carboxylic acids may be most effective for those hydrosilation products which can be purified, as by distillation, and thusly separated from high boiling, high molecular weight carboxylic acids which will remain in the distillation residue, which can be isolated for disposal, or reused to promote a subsequent batch of product.

### EXAMPLES

The following specific examples and procedures are presented to illustrate the invention, but are not to be construed as limiting thereof.

### Example 1 - Reactions of Methyldichlorosilane with Allyl Cyanide

All reactions were run in 300 ml. sealed autoclaves, 50% filled, with a 1.1/1 molar ratio of allyl cyanide/methyldichlorosilane and 25 ppm of platinum supplied as a solution of chloroplatinic acid in ethanol. Reactants/catalyst were combined and heated at 150 °C for ½ hr., plus heat-up and cool-down times. Five runs made in the absence of acetic acid provided an average yield of 54.3 wt% 3-cyanopropylmethyldichlorosilane with 14.5 wt% unreacted MeSiHCl₂, and 18.8 wt% unreacted allyl cyanide. Three runs made with the same raw materials plus 1.0 wt.-% acetic acid provided an average yield of 84.5 % 3-cyanopropylmethyldichlorosilane, with 0.4% unreacted methyldichlorosilane and 6.1% unreacted allyl cyanide. Separate experiments were run with 2% added MeSiH₂Cl (4.1% yield), and 1.0 wt.-% acetic acid added to previous incomplete reaction (74.0% yield). Gas chromatographic analyses of additional experiments confirmed the formation of MeSiH₂Cl and MeSiCl₃ by disproportionation of MeSiHCl₂, and the reaction of acetic acid with MeSiH₂Cl to form an acetoxy derivative and hydrogen gas. Substitution of oleic acid for acetic acid provides similar high yields; low boiling by-products or products containing acetoxy groups are not detected in the distilled product.

### Example 2 - Reaction of Trimethoxysilane with Allyl Glycidyl Ether

All reactions were run by the addition of trimethoxysilane (12.3 parts by weight) to allyl glycidyl ether (14.4 parts by weight, 28% molar excess) containing 7 ppm of Pt, supplied as a solution of chloroplatinic acid in ethanol, with varying amounts of acetic acid, oleic acid, or combinations thereof, ranging from 0.02 to 0. 22 wt.%.

At 0.02 wt.% acetic acid, the beta-isomer content of the undistilled product was 1.22%. At 0.087 wt.% acetic acid the undistilled product had a 0.66% beta-isomer content, but an acetoxysilane content of 0.08%. A run with 0.02 wt.% acetic acid and 0.18 wt.% oleic acid (0.2 wt.%total) provided undistilled product with 0.59 % beta-isomer and 0.009% acetoxysilane. A similar run with 0.04 wt.% acetic acid and 0.18 wt.% oleic acid (0.22 wt.% total) provided similar product with 0.59 % beta-isomer, but with 0.045 wt.% acetoxysilane.

### Example 3 - Other Hydrosilation Reactions

Positive promotion effects were noted when carboxylic acids were used to promote platinum-catalyzed hydrosilation reactions trichlorosilane and an amylene mixture consisting primarily of t-amylene, methyldiethoxysilane and allyl glycidyl ether, and triethoxysilane and 1-octene.

The above Examples and disclosure are intended to be illustrative and not exhaustive. These examples and description will suggest many variations and alternatives to one of ordinary skill in this art. All these alternatives and variations are intended to be included within the scope of the attached claims. Those familiar with the art may recognize other equivalents to the specific embodiments described herein which equivalents are also intended to be encompassed by the claims attached hereto.

## Claims

1. A hydrosilation method comprising reacting a reaction mixture comprising:
a) a compound having aliphatic carbon-carbon unsaturation thereon;
b) a hydridosilane compound; and
c) a platinum catalyst to produce a hydrosilation addition product of said compounds a) and b), the invention **characterized in that** the reaction mixture further comprises:
d) a carboxylic acid having a molecular weight greater than 60 and a boiling point higher than 118°C selected from the group consisting of ricinolenic acid, oleic acid, erucic acid, cyanoacetic acid and phenylacetic acid, and either
i) the compound a) is allyl cyanide;
or
ii) the compound a) is at least one epoxy olefin.

2. The process according to claim 1 wherein the hydridosilane is represented by the formula
RₙX₃₋ₙSiH
wherein R is a branched or linear alkyl group of 1 to 18 carbon atoms, a cyclic alkyl group of four to eight carbon atoms or an aryl, alkaryl, or aralkyl group of six to twelve carbon atoms, optionally containing halogen, oxygen, or nitrogen substituents with the proviso that such substituents do not interfere with either hydrosilation or promotion, and X is a reactive group selected from a halogen group or an alkoxy group and n is an integer selected from 0, 1, and 2.

3. The process according to claim 2 wherein n=0 and X is an alkoxy group selected from the group consisting of ethoxy and methoxy.

4. The process according to any previous claim wherein the platinum catalyst is chloroplatinic acid.

5. The process according to claim 1 wherein the carboxylic acid is selected from the group consisting of: ricinolenic, oleic acid, and erucic acid.

6. The process according to any previous claim wherein the reaction mixture additionally comprises acetic acid.

7. The process according to any previous claim wherein the carboxylic acid (d) is oleic acid.

## Patentansprüche

1. Hydrosilylierungsverfahren, welches das Umsetzen einer Reaktionsmischung umfasst, die folgendes umfasst:
a) eine Verbindung mit darauf befindlicher aliphatischer Kohlenstoff-Kohlenstoff-Ungesättigtheit;
b) eine Hydridosilanverbindung; und
c) einen Platinkatalysator, um ein Hydrosilylierungsadditionsprodukt der Verbindungen a) und b) herzustellen, wobei die Verbindung **dadurch gekennzeichnet ist, dass** die Reaktionsmischung ferner folgendes umfasst:
d) eine Carbonsäure mit einem Molekulargewicht von mehr als 60 und einem Siedepunkt von mehr als 118°C, ausgewählt aus der Gruppe, die aus Ricinolensäure, Ölsäure, Erucasäure, Cyanoessigsäure und Phenylessigsäure besteht, und wobei
i) die Verbindung a) Allylcyanid ist;
oder
ii) die Verbindung a) mindestens ein Epoxyolefin ist.

2. Verfahren gemäß Anspruch 1, wobei das Hydidosilan durch die Formel
RₙX₃₋ₙSiH
repräsentiert wird,
worin R eine verzweigte oder lineare Alkylgruppe mit 1 bis 18 Kohlenstoffatomen, eine cyclische Alkylgruppe mit vier bis acht Kohlenstoffatomen oder eine Aryl-, Alkaryl- oder Aralkylgruppe mit sechs bis zwölf Kohlenstoffatomen ist, gegebenenfalls Halogen-, Sauerstoff- oder Stickstoffsubstituenten enthaltend, mit der Maßgabe, dass solche Substituenten weder die Hydrosilylierung noch die Promotion stören, und X eine reaktive Gruppe ist, die aus einer Halogengruppe oder einer Alkoxygruppe gewählt ist und n eine ganze Zahl ist, die aus 0, 1 und 2 gewählt ist.

3. Verfahren gemäß Anspruch 2, wobei n = 0 ist und X eine Alkoxygruppe ist, die aus der Gruppe gewählt ist, welche aus Ethoxy und Methoxy besteht.

4. Verfahren gemäß einem beliebigen der vorausgehenden Ansprüche, wobei der Platinkatalysator Chlorplatinsäure ist.

5. Verfahren gemäß Anspruch 1, wobei die Carbonsäure aus der Gruppe gewählt ist, die aus folgendem besteht: Ricinolensäure, Ölsäure und Erucasäure.

6. Verfahren gemäß einem beliebigen der vorausgehenden Ansprüche, wobei die Reaktionsmischung zusätzlich Essigsäure umfasst.

7. Verfahren gemäß einem beliebigen der vorausgehenden Ansprüche, wobei die Carbonsäure (d) Ölsäure ist.

## Revendications

1. Procédé d'hydrosilation comprenant la réaction d'un mélange réactionnel comprenant :
a) un composé ayant une insaturation carbone-carbone aliphatique sur celui-ci;
b) un composé hydridosilane; et
c) un catalyseur à base de platine pour produire un produit d'addition par hydrosilation desdits composés a) et b), l'invention **caractérisée en ce que** le mélange réactionnel comprend en outre:
d) un acide carboxylique ayant un poids moléculaire supérieur à 60 et un point d'ébullition supérieur à 118 °C choisi parmi le groupe consistant en l'acide ricinolénique, l'acide oléique, l'acide érucique, l'acide cyanoacétique et l'acide phénylacétique, et soit
i) le composé a) est un cyanure d'allyle;
soit
ii) le composé a) est au moins une époxy-oléfine.

2. Procédé selon la revendication 1, dans lequel l'hydridosilane est représenté par la formule
RₙX₃₋ₙSiH
dans laquelle R est un groupe alkyle ramifié ou linéaire de 1 à 18 atomes de carbone, un groupe alkyle cyclique de quatre à huit atomes de carbone ou un groupe aryle, alkaryle, ou aralkyle de six à douze atomes de carbone, contenant facultativement des substituants halogène, oxygène ou azote, sous réserve que de tels substituants n'interfèrent ni avec l'hydrosilation, ni avec l'activation, et X est un groupe réactif choisi parmi un groupe halogène ou un groupe alcoxy et n est un entier choisi parmi 0, 1 et 2.

3. Procédé selon la revendication 2, dans lequel n = 0 et X est un groupe alcoxy choisi parmi le groupe consistant en un éthoxy et un méthoxy.

4. Procédé selon une quelconque revendication précédente, dans lequel le catalyseur à base de platine est un acide chloroplatinique.

5. Procédé selon la revendication 1, dans lequel l'acide carboxylique est choisi parmi le groupe consistant en : l'acide ricinolénique, l'acide oléique et l'acide érucique.

6. Procédé selon une quelconque revendication précédente, dans lequel le mélange réactionnel comprend en outre de l'acide acétique.

7. Procédé selon une quelconque revendication précédente, dans lequel l'acide carboxylique (d) est l'acide oléique.
